# EUROPEAN PATENT APPLICATION

(11) **EP 4 745 747 A1**
(43) Date of publication of application: **20.05.2026**
(21) Application number: 23949816.5
(22) Date of filing: 22.08.2023
(51) Int. Cl.: G06F 3/04895, G06N 20/00, G06F 16/332, G06F 16/33, G06F 16/34

(54) **DEVICE FOR GENERATING PROMPT FOR INTERACTIVE ARTIFICIAL INTELLIGENCE OR METHOD THEREFOR**

(71) Applicant: LG Electronics Inc., Yeongdeungpo-gu Seoul 07336 (KR)
(72) Inventor: PARK, Seunghye, Seoul 06772 (KR); SON, Myeongok, Seoul 06772 (KR); HEO, Seunghyun, Seoul 06772 (KR); MIN, Sunki, Seoul 06772 (KR)
(74) Representative: Vossius & Partner Patentanwälte Rechtsanwälte mbB
(86) International application number: PCT/KR2023/012395
(87) International publication number: WO 2025/041876

(57) **Abstract**

Disclosed is a device for generating a prompt for an interactive artificial intelligence service, the device comprising a controller for generating the prompt, and a transceiver for transmitting the generated prompt to the interactive artificial intelligence service, wherein the controller can: acquire a keyword extracted from an utterance of a user; acquire an extended keyword associated with the extracted keyword; and generate the prompt on the basis of the extracted keyword and the extended keyword.

## Description

### TECHNICAL FIELD

The present disclosure relates to a method for prompt generation or an apparatus therefor, and more particularly, to generation of a prompt to be used as an input for an interactive artificial intelligence service.

### BACKGROUND

Recently, in multimedia devices such as a mobile phone and a TV, a new form-factor is being discussed. The form-factor refers to a structured form of a product.

The reason why form-factor innovation is emerging as important in a display industry is because of increasing needs of a user for the form-factor that may be used freely and conveniently regardless of a use situation departing from a typical form-factor customized for a specific use environment in the past, resulted from an increase in consumer mobility, convergence between devices, a rapid progress in smartization, and the like.

For example, vertical TVs are expanding, breaking the stereotype that the TVs are viewed horizontally. The vertical TV is a product that allows the user to change a direction of a screen by reflecting characteristics of the Millennials and Gen Z who are accustomed to enjoying content on mobile. The vertical TVs are convenient because a social media or a shopping site image may be viewed easily and comments may be read while watching videos at the same time. In particular, the advantages of the vertical TV are magnified more when the vertical TV is in association with a smartphone via a near-field communication (NFC)-based mirroring function. When watching regular TV programs or movies, the TV may be switched horizontally.

As another example, a rollable TV and a foldable smartphone are similar to each other in that they both use 'flexible displays'. The flexible display literally means a flexible electronic device. To be flexible, the flexible display must first be thin. A substrate that receives information and converts the same into light must be thin and flexible so that a performance lasts for a long time without damage.

Being flexible means that the flexible display should not be greatly affected even when an impact is applied thereto. While the flexible display is bent or folded, a pressure is continuously applied to a junction. It is necessary to have excellent durability such that the inside is not damaged by such pressure, but also have a property of being easily deformed when the pressure is applied.

The flexible display is implemented based on an OLED, for example. The OLED is a display using an organic light emitting material, the organic material is relatively more flexible than an inorganic material such as a metal. Furthermore, the OLED has a thin substrate and thus is more competitive than other displays. In a case of an LCD substrate used in the past, there is a limit to reducing a thickness because liquid crystal and glass are required separately.

Finally, as a new form-factor for the TV, a demand for a TV that may be easily moved indoors and outdoors is increasing. In particular, because of the recent corona virus epidemic, the time the users stay at home is increasing, and thus, a demand for a second TV is increasing. In addition, because of an increase in population going out for camping or the like, there is a demand for the TV of the new form-factor that may be easily carried and moved.

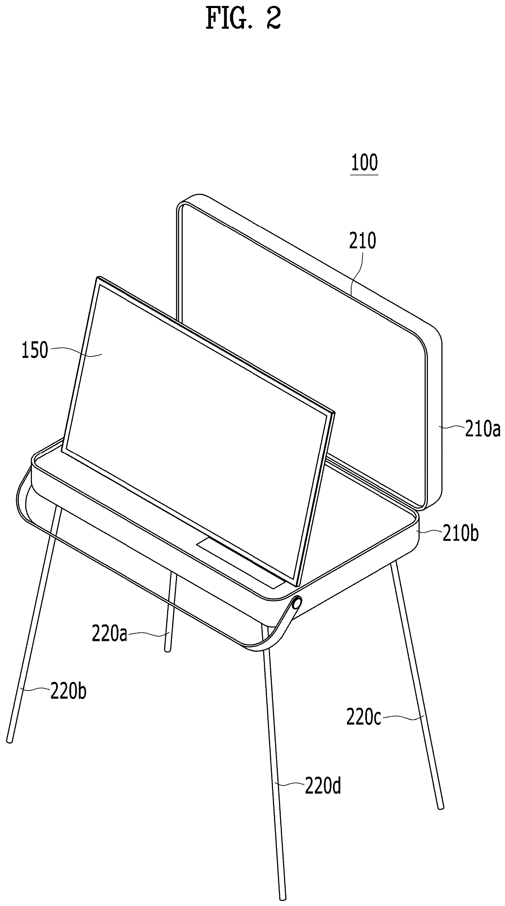

FIG. 2 illustrates an example of a television (TV) with a new form factor.

Disclosure of an interactive artificial intelligence service commonly referred to as generative artificial intelligence has caused a significant social impact. Notwithstanding such controversies, utilization of the interactive artificial intelligence service is expected to enhance user experience. However, the interactive artificial intelligence service has a higher likelihood of providing meaningful responses, that is, responses suitable for an intention of a querying user, as a prompt becomes more specific. Accordingly, an efficient method for generating a prompt to be input to or transmitted to the interactive artificial intelligence service is required.

### DISCLOSURE

### TECHNICAL PROBLEM

The present disclosure relates to generation of a prompt to be used as an input for an interactive artificial intelligence service.

### TECHNICAL SOLUTION

An apparatus configured to generate a prompt for an interactive artificial intelligence service is provided. The apparatus includes: a controller configured to generate the prompt; and a transceiver configured to transmit the generated prompt to the interactive artificial intelligence service. The controller may be configured to: obtain a keyword extracted from an utterance of a user; obtain an expanded keyword associated with the extracted keyword; and generate a prompt based on the extracted keyword and the expanded keyword.

A method for generating a prompt for an interactive artificial intelligence service is provided. The method includes: obtaining a keyword extracted from an utterance of a user; obtaining an expanded keyword associated with the extracted keyword; generating a prompt based on the extracted keyword and the expanded keyword; and transmitting the generated prompt to the interactive artificial intelligence service. The expanded keyword may be obtained based on information related to the user stored in a user device.

A computer-readable medium storing a computer program for executing a method for generating a prompt for an interactive artificial intelligence service is provided.

A system configured to generate a prompt for an interactive artificial intelligence service is provided. The system includes a client device and a server device. The client device may include: a user input interface configured to sense an utterance of a user; a controller configured to obtain a keyword extracted from the utterance of the user and obtain an expanded keyword associated with the extracted keyword based on information related to the user stored in the client device; and a transceiver configured to transmit the extracted keyword and the expanded keyword to the server device. The server device may include: a transceiver configured to receive the extracted keyword and the expanded keyword from the client device; and a controller configured to generate a prompt based on the extracted keyword and the expanded keyword.

The above-described solutions are merely some of the embodiments of the present disclosure, and various embodiments reflecting the technical features of the present disclosure may be derived and understood by those skilled in the art based on the following detailed description of the present disclosure.

### ADVANTAGEOUS EFFECTS

The present disclosure has the following effects.

According to the present disclosure, a prompt may be specified without direct input from a user.

According to the present disclosure, a structured response format may be requested, and thus, a response in a structured format may be obtained from an interactive artificial intelligence service.

According to the present disclosure, user experience may be enhanced by outputting a response suitable for a user intention.

The effects of the present disclosure are not limited to those mentioned above, and other effects not described herein will be clearly understood by those skilled in the art to which the present disclosure pertains from the following detailed description of the embodiments.

### BRIEF DESCRIPTION OF THE DRAWINGS

The accompanying drawings, which are included as part of the detailed description to assist in understanding the present disclosure, illustrate exemplary embodiments of the present disclosure and, together with the detailed description, serve to explain the technical spirit of the present disclosure.
FIG. 1 is a block diagram for explaining each component of a display device.
FIG. 2 is a diagram illustrating a display device according to an embodiment of the present disclosure.
FIGS. 3 to 8 are flowcharts of a method for generating a prompt for an interactive artificial intelligence service according to the present disclosure.
FIGS. 9 to 11 illustrate examples of processing according to user modification input in a procedure for generating a prompt for an interactive artificial intelligence service according to the present disclosure.
FIG. 12 illustrates an overall procedure for generating a prompt and outputting a response result to the prompt for an interactive artificial intelligence service according to the present disclosure.
FIGS. 13 and 14 illustrate structures of a system for an interactive artificial intelligence service according to the present disclosure.
FIGS. 15 and 16 illustrate examples of output of a user interface for a procedure for generating a prompt for an interactive artificial intelligence service according to the present disclosure.

### DETAILED DESCRIPTION

Hereinafter, the embodiments disclosed herein will be described in detail with reference to the accompanying drawings, but components that are the same as or similar to each other regardless of reference numerals will be given the same reference numerals, and redundant description thereof will be omitted. The suffixes "module" and "unit" for components used in the following description are given or used together in consideration of ease of writing the present document, and do not have meanings or roles that are distinct from each other by themselves. Further, in describing the embodiments disclosed herein, when it is determined that a detailed description of related known technologies may unnecessarily obscure the gist of the embodiments disclosed herein, detailed description thereof will be omitted. In addition, the attached drawings are provided for easy understanding of the embodiments disclosed herein and do not limit technical idea disclosed herein, and should be construed as including all modifications, equivalents, and alternatives falling within the spirit and scope of the present disclosure.

Although terms including ordinal numbers, such as first, second, and the like, may be used to describe various components, the components are not limited by the terms. The terms are only used to distinguish one component from another.

It should be understood that when a component is referred to as being "connected with" another component, the component may be directly connected with another component or an intervening component may also be present. In contrast, it should be understood that when a component is referred to as being "directly connected with" another component, there is no intervening component present.

A singular representation may include a plural representation unless it represents a definitely different meaning from the context.

The terms "includes" or "has" used herein should be understood as not precluding possibility of existence or addition of one or more other characteristics, figures, steps, operations, constituents, components, or combinations thereof.

In the following description, a display device 100 is referred to. However, the display device may be referred to by various names such as a television (TV) or a multimedia device, and the scope of the present disclosure is not limited by such names.

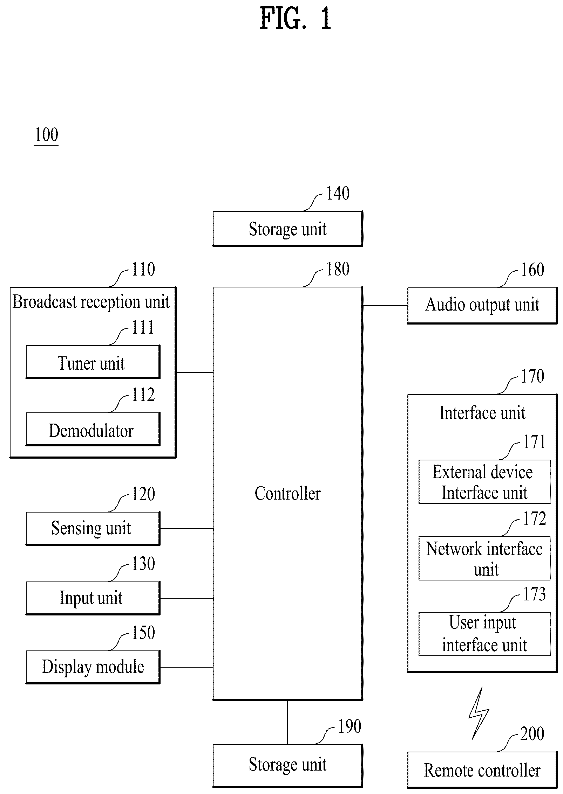

FIG. 1 is a block diagram for illustrating each component of a display device 100 according to an embodiment of the present disclosure.

The display device 100 may include a broadcast receiver 1210, an external device interface 171, a network interface 172, storage 140, a user input interface 173, an input unit 130, and a controller 180, a display module 150, an audio output unit 160, and/or a power supply 190.

The broadcast receiver 1210 may include a tuner 1211 and a demodulator 1212.

Unlike the drawing, the display device 100 may include only the external device interface 171 and the network interface 172 among the broadcast receiver 1210, the external device interface 171, and the network interface 172. That is, the display device 100 may not include the broadcast receiver 1210.

The tuner 1211 may select a broadcast signal corresponding to a channel selected by the user or all pre-stored channels among broadcast signals received via an antenna (not shown) or a cable (not shown). The tuner 1211 may convert the selected broadcast signal into an intermediate-frequency signal or a base band image or audio signal.

For example, when the selected broadcast signal is a digital broadcast signal, the tuner 1211 may convert the digital broadcast signal into a digital IF signal (DIF), and when the selected broadcast signal is an analog broadcast signal, the tuner 1211 may convert the analog broadcast signal into an analog base band image or audio signal (CVBS/SIF). That is, the tuner 1211 may process the digital broadcast signal or the analog broadcast signal. The analog base band image or audio signal (CVBS/SIF) output from the tuner 1211 may be directly input to the controller 180.

In one example, the tuner 1211 may sequentially select broadcast signals of all stored broadcast channels via a channel memory function among the received broadcast signals, and convert the selected signals into the intermediate-frequency signal or the base band image or audio signal.

In one example, the tuner 1211 may include a plurality of tuners to receive broadcast signals of a plurality of channels. Alternatively, the tuner 1211 may be a single tuner that simultaneously receives the broadcast signals of the plurality of channels.

The demodulator 1212 may receive the digital IF signal (DIF) converted by the tuner 1211 and perform a demodulation operation. The demodulator 1212 may output a stream signal (TS) after performing demodulation and channel decoding. In this regard, the stream signal may be a signal in which an image signal, an audio signal, or a data signal is multiplexed.

The stream signal output from the demodulator 1212 may be input to the controller 180. The controller 180 may output an image via the display module 150 and output an audio via the audio output unit 160 after performing demultiplexing, image/audio signal processing, and the like.

A sensing unit 120 refers to a device that senses a change in the display device 100 or an external change. For example, the sensing unit 120 may include at least one of a proximity sensor, an illumination sensor, a touch sensor, an infrared (IR) sensor, an ultrasonic sensor, an optical sensor (e.g., a camera), a voice sensor (e.g., a microphone), a battery gauge, and an environment sensor (e.g., a hygrometer, a thermometer, and the like).

The controller 180 may check a state of the display device 100 based on information collected by the sensing unit 120, and when a problem occurs, the controller 180 may notify the user of the problem or may make adjustments on its own to control the display device 100 to maintain the best state.

In addition, a content, an image quality, a size, and the like of the image provided by the display module 150 may be controlled differently based on a viewer sensed by the sensing unit, a surrounding illumination, or the like to provide an optimal viewing environment. As a smart TV progresses, the number of functions of the display device increases and the number of sensing units 20 also increases together.

The input unit 130 may be disposed at one side of a main body of the display device 100. For example, the input unit 130 may include a touch pad, a physical button, and the like. The input unit 130 may receive various user commands related to an operation of the display device 100 and transmit a control signal corresponding to the input command to the controller 180.

Recently, as a size of a bezel of the display device 100 decreases, the number of display devices 100 in a form in which the input unit 130 in a form of a physical button exposed to the outside is minimized is increasing. Instead, the minimized physical button may be located on a rear surface or a side surface of the display device 100, and a user input may be received from a remote control device 200 via the touch pad or the user input interface 173 to be described later.

The storage 140 may store programs for processing and controlling each signal in the controller 180, or may store signal-processed image, audio, or data signals. For example, the storage 140 may store application programs designed for the purpose of performing various tasks processable by the controller 180, and may selectively provide some of the stored application programs upon request from the controller 180.

The programs stored in the storage 140 are not particularly limited as long as they may be executed by the controller 180. The storage 140 may also perform a function for temporarily storing the image, audio, or data signals received from an external device via the external device interface 171. The storage 140 may store information on a predetermined broadcast channel via the channel memory function such as a channel map.

FIG. 1 shows an embodiment in which the storage 140 is disposed separately from the controller 180, but the scope of the present disclosure is not limited thereto, and the storage 140 is able to be included in the controller 180.

The storage 140 may include at least one of a volatile memory (e.g., a DRAM, a SRAM, a SDRAM, and the like) or a non-volatile memory (e.g., a flash memory, a hard disk drive (HDD), a solid-state drive (SSD), and the like).

The display module 150 may generate a driving signal by converting the image signal, the data signal, an OSD signal, and a control signal processed by the controller 180 or the image signal, the data signal, a control signal, and the like received from the interface 171. The display module 150 may include the display panel 11 having the plurality of pixels.

The plurality of pixels disposed on the display panel may include RGB sub-pixels. Alternatively, the plurality of pixels disposed on the display panel may include RGBW sub-pixels. The display module 150 may generate driving signals for the plurality of pixels by converting the image signal, the data signal, the OSD signal, the control signal, and the like processed by the controller 180.

The display module 150 may be a plasma display panel (PDP), a liquid crystal display (LCD), an organic light emitting diode (OLED), a flexible display module, and the like, or may be a three-dimensional (3D) display module. The 3D display module 150 may be classified into a non-glasses type and a glasses type.

The display device 100 includes the display module that occupies most of the front surface thereof and a casing that covers a rear surface, a side surface, and the like of the display module and packages the display module.

Recently, the display device 100 may use the display module 150 that may be bent such as the light emitting diode (LED) or the organic light emitting diode (OLED) to realize a curved screen in addition to a flat screen.

The LCD, which was mainly used in the past, received light via a backlight unit because it was difficult for the LCD to emit light on its own. The backlight unit is a device that uniformly supplies light supplied from a light source to a liquid crystal located in the front. As the backlight unit became thinner, it was possible to realize a thin LCD, but it was difficult to implement the backlight unit with a flexible material, and when the backlight unit is bent, it was difficult to uniformly supply the light to the liquid crystal, resulting in a change in brightness of the screen.

On the other hand, the LED or the OLED may be implemented to be bendable because each element constituting the pixel emits light on its own and thus the backlight unit is not used. In addition, because each element emits light on its own, even when a positional relationship with a neighboring element changes, brightness thereof is not affected, so that the display module 150 that is bendable using the LED or the OLED may be implemented.

The organic light emitting diode (OLED) panel appeared in earnest in mid-2010 and is rapidly replacing the LCD in a small and medium-sized display market. The OLED is a display made using a self-luminous phenomenon of emitting light when current flows through a fluorescent organic compound. The OLED has a higher image quality response speed than the LCD, so that there is almost no afterimage when realizing a moving image.

The OLED is a light-emitting display product that uses three types (red, green, and blue) of phosphor organic compounds having a self-luminous function, and uses a phenomenon in which electrons and positively charged particles injected from a cathode and an anode are combined with each other within an organic material to emit light by itself, so that there is no need for a backlight (a backlight device) that deteriorates color.

The light emitting diode (LED) panel, as a technology that uses one LED element as one pixel, may reduce a size of the LED element compared to the prior art, and thus, may implement the display module 150 that is bendable. A device referred to as an LED TV in the past only used the LED as the light source for the backlight unit that supplies the light to the LCD, and the LED itself was not able to constitute the screen.

The display module includes the display panel, and a coupling magnet, a first power supply, and a first signal module positioned on a rear surface of the display panel. The display panel may include a plurality of pixels R, G, and B. The plurality of pixels R, G, and B may be formed in respective areas where multiple data lines and multiple gate lines intersect each other. The plurality of pixels R, G, and B may be disposed or arranged in a matrix form.

For example, the plurality of pixels R, G, and B may include a red (hereinafter, 'R') sub-pixel, a green ('G') sub-pixel, and a blue ('B') sub-pixel. The plurality of pixels R, G, and B may further include a white (hereinafter, 'W') sub-pixel.

In the display module 150, a side on which the image is displayed may be referred to as a front side or a front surface. When the display module 150 displays the image, a side on which the image is not able to be observed may be referred to as a rear side or a rear surface.

In one example, the display module 150 may be constructed as the touch screen and may be used as the input device in addition to the output device.

The audio output unit 160 receives an audio-processed signal from the controller 180 and outputs the received signal as the audio.

An interface 170 serves as a passage for various types of external devices connected to the display device 100. The interface may be in a wireless scheme using the antenna as well as a wired scheme of transmitting and receiving data via the cable.

The interface 170 may include at least one of a wired/wireless headset port, an external charger port, a wired/wireless data port, a memory card port, a port for connecting a device having an identification module, an audio input/output (I/O) port, a video input/output (I/O) port, and an earphone port.

An example of the wireless scheme may include the broadcast receiver 1210 described above, and may include not only the broadcast signal, but also a mobile communication signal, a short-distance communication signal, a wireless Internet signal, and the like.

The external device interface 171 may transmit or receive data with a connected external device. To this end, the external device interface 171 may include an A/V input/output unit (not shown).

The external device interface 171 may be connected to the external device such as a digital versatile disk (DVD), a Blu-ray, a game console, a camera, a camcorder, a computer (a laptop), a set-top box, and the like in a wired/wireless manner, and may perform input/output operations with the external device.

In addition, the external device interface 171 may establish a communication network with various remote control devices 200 to receive a control signal related to the operation of the display device 100 from the remote control device 200 or to transmit data related to the operation of the display device 100 to the remote control device 200.

The external device interface 171 may include a wireless communication unit (not shown) for short-range wireless communication with other electronic devices. With such a wireless communication unit (not shown), the external device interface 171 may exchange data with an adjacent mobile terminal. In particular, the external device interface 171 may receive device information, running application information, an application image, and the like from the mobile terminal in a mirroring mode.

The network interface 172 may provide an interface for connecting the display device 100 to a wired/wireless network including an Internet network. For example, the network interface 172 may receive content or data provided by the Internet, a content provider, or a network operator via the network. In one example, the network interface 172 may include a communication module (not shown) for connection to the wired/wireless network.

The external device interface 171 and/or the network interface 172 may include a communication module for the short-range communication such as a wireless fidelity (Wi-Fi), a Bluetooth, a Bluetooth low energy (BLE), a Zigbee, and a near field communication (NFC), a communication module for cellular communication such as a long-term evolution (LTE), an LTE advance (LTE-A), a code division multiple access (CDMA), a wideband CDMA (WCDMA), a universal mobile telecommunications system (UMTS), and a wireless broadband (WiBro), and the like.

The user input interface 173 may transmit a signal input by the user to the controller 180 or transmit a signal from the controller 180 to the user. For example, a user input signal such as power ON/OFF, channel selection, screen setting, and the like may be transmitted/received to/from the remote control device 200, a user input signal input from a local key (not shown) such as a power key, a channel key, a volume key, a setting value, and the like may be transmitted to the controller 180, a user input signal input from a sensor unit (not shown) that senses a gesture of the user may be transmitted to the controller 180, or a signal from the controller 180 may be transmitted to the sensor unit.

The controller 180 may include at least one processor, and may control overall operations of the display device 100 using the processor included therein. In this regard, the processor may be a general processor such as a central processing unit (CPU). In one example, the processor may be a dedicated device such as an ASIC or a processor based on other hardware.

The controller 180 may demultiplex the stream input via the tuner 1211, the demodulator 1212, the external device interface 171, or the network interface 172, or process a demultiplexed signal to generate or output a signal for image or audio output.

The image signal image-processed by the controller 180 may be input to the display module 150 and displayed as an image corresponding to the corresponding image signal. In addition, the image signal image-processed by the controller 180 may be input to an external output device via the external device interface 171.

The audio signal processed by the controller 180 may be output as the audio via the audio output unit 160. In addition, the audio signal processed by the controller 180 may be input to the external output device via the external device interface 171. In addition, the controller 180 may include a demultiplexer, an image processor, and the like.

In addition, the controller 180 may control overall operations within the display device 100. For example, the controller 180 may control the tuner 1211 to select (tune) a broadcast corresponding to the channel selected by the user or the pre-stored channel.

In addition, the controller 180 may control the display device 100 in response to a user command input via the user input interface 173 or by an internal program. In one example, the controller 180 may control the display module 150 to display the image. In this regard, the image displayed on the display module 150 may be a still image or a moving image, and may be a 2D image or a 3D image.

In one example, the controller 180 may allow a predetermined 2D object to be displayed within the image displayed on the display module 150. For example, the object may be at least one of a connected web screen (a newspaper, a magazine, and the like), an electronic program guide (EPG), various menus, a widget, an icon, the still image, the moving image, and a text.

In one example, the controller 180 may modulate and/or demodulate a signal using an amplitude shift keying (ASK) scheme. Here, the amplitude shift keying (ASK) scheme may refer to a scheme of modulating the signal by varying an amplitude of a carrier wave based on a data value or restoring an analog signal to a digital data value based on to the amplitude of the carrier wave.

For example, the controller 180 may modulate the image signal using the amplitude shift keying (ASK) scheme and transmit the modulated image signal via a wireless communication module.

For example, the controller 180 may demodulate and process the image signal received via the wireless communication module using the amplitude shift keying (ASK) scheme.

Therefore, the display device 100 may easily transmit and receive a signal with another image display device disposed adjacent thereto without using a unique identifier such as a media access control address (MAC address) or a complex communication protocol such as TCP/IP.

In one example, the display device 100 may further include a photographing unit (not shown). The photographing unit may photograph the user. The photographing unit may be implemented with one camera, but may not be limited thereto, and may be implemented with a plurality of cameras. In one example, the photographing unit may be embedded in the display device 100 or disposed separately upwardly of the display module 150. Information on the image photographed by the photographing unit may be input to the controller 180.

The controller 180 may recognize a location of the user based on the image photographed by the photographing unit. For example, the controller 180 may identify a distance between the user and the display device 100 (a z-axis coordinate). In addition, the controller 180 may determine an x-axis coordinate and a y-axis coordinate within the display module 150 corresponding to the location of the user.

The controller 180 may sense the gesture of the user based on the image photographed by the photographing unit or the signal sensed by the sensor unit, or a combination thereof.

The power supply 190 may supply the corresponding power throughout the display device 100. In particular, the power may be supplied to the controller 180 that may be implemented in a form of a system on chip (SOC), the display module 150 for displaying the image, the audio output unit 160 for outputting the audio, and the like.

Specifically, the power supply 190 may include a converter (not shown) that converts AC power to DC power and a Dc/Dc converter (not shown) that converts a level of the DC power.

In one example, the power supply 190 serves to receive the power from the outside and distribute the power to each component. The power supply 190 may use a scheme of supplying the AC power in direct connection to an external power source, and may include a power supply 190 that may be charged and used by including a battery.

In a case of the former, the power supply is used in connection with the cable, and has difficulties in moving or is limited in a movement range. In a case of the latter, the movement is free, but a weight and a volume of the power supply increase as much as those of the battery, and the power supply must be directly connected to a power cable for a certain period of time for charging or coupled to a charging cradle (not shown) that supplies the power.

The charging cradle may be connected to the display device via a terminal exposed to the outside, or the built-in battery may be charged using a wireless scheme when approaching the charging cradle.

The remote control device 200 may transmit the user input to the user input interface 173. To this end, the remote control device 200 may use the Bluetooth, a radio frequency (RF) communication, an infrared radiation (IR) communication, an ultra-wideband (UWB), the ZigBee, or the like. In addition, the remote control device 200 may receive the image, audio, or data signal output from the user input interface 173 and display the same thereon or output the same as audio.

In one example, the display device 100 described above may be a fixed or mobile digital broadcast receiver that may receive a digital broadcast.

The block diagram of the display device 100 shown in FIG. 1 is only a block diagram for one embodiment of the present disclosure, and each component of the block diagram is able to be integrated, added, or omitted based on specifications of the display device 100 that is actually implemented.

That is, when necessary, two or more components may be combined to each other into one component, or one component may be subdivided into two or more components. In addition, functions performed in each block are for illustrating the embodiment of the present disclosure, and a specific operation or a device thereof does not limit the scope of rights of the present disclosure.

FIG. 2 is a diagram showing a display device according to an embodiment of the present disclosure. Hereinafter, redundant descriptions that duplicate the above descriptions will be omitted.

Referring to FIG. 2, the display device 100 has the display module 150 accommodated inside a housing 210. In this regard, the housing 210 may include an upper casing 210a and a lower casing 210b, and the upper casing 210a and the lower casing 210b may have a structure of being opened and closed.

In one embodiment, the audio output unit 160 may be included in the upper casing 210a of the display device 100, and the main board that is the controller 180, a power board, the power supply 190, the battery, the interface 170, the sensing unit 120, and the input unit (including the local key) 130 may be accommodated in the lower casing 210b. In this regard, the interface 170 may include a Wi-Fi module, a Bluetooth module, an NFC module, and the like for the communication with the external device, and the sensing unit 120 may include an illuminance sensor and an IR sensor.

In one embodiment, the display module 150 may include a DC-DC board, a sensor, and a low voltage differential signaling (LVDS) conversion board.

In addition, in one embodiment, the display device 100 may further include four detachable legs 220a, 220b, 220c, and 220d. In this regard, the four legs 220a, 220b, 220c, and 220d may be attached to the lower casing 210b to space the display device 100 from the floor.

The display device illustrated in FIG. 2 is exemplary, and a display device to which the present disclosure may be applied includes not only a display device having a new form factor but also a display device having an existing form factor, including a general flat-panel TV.

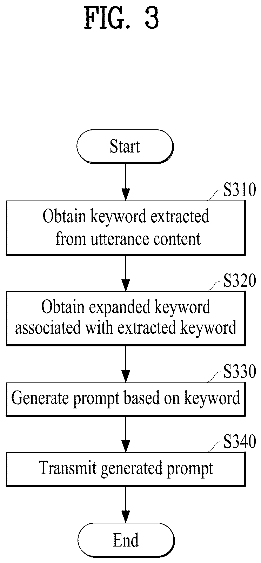

Hereinafter, the proposed technology is described with reference to FIGS. 3 to 12. Procedures according to flowcharts of FIGS. 3 to 8 may be performed by the display device 100 or by a control unit 180 of the display device 100 (hereinafter referred to as a controller).

Additionally or alternatively, depending on a specific aspect to which the present disclosure is applied, the procedures according to the flowcharts of FIGS. 3 to 8 may be performed by a system (or a server device) on a network connected to the display device 100 through wired or wireless communication.

Additionally or alternatively, depending on a specific aspect to which the present disclosure is applied, the procedures according to flowcharts of FIGS. 3 and 4 and FIGS. 6 to 8 may be performed by the display device 100 and the system (or the server device) on the network connected to the display device 100 through wired or wireless communication (that is, the two devices cooperate). The server device also includes a configuration corresponding to at least a part of configurations of the display device 100 described with reference to FIG. 1.

Additionally, when the present disclosure is implemented through cooperation between the display device 100 and a server device, the display device 100 may be referred to as a client device.

For simplicity of the following description, each procedure is described as being performed by a prompt generation device. The prompt generation device may be one of the display device 100, the controller of the display device 100, or the system or server device on the network connected to the display device 100 through wired or wireless communication as described above.

FIG. 3 is a flowchart of a method for generating a prompt for an interactive artificial intelligence service according to the present disclosure.

The prompt generation device obtains a keyword extracted from a user utterance (S310). The keyword may be extracted from the utterance through speech to text (STT).

The prompt generation device obtains an expanded keyword associated with the obtained keyword (S320). The expanded keyword is based on user context information. More specifically, the expanded keyword is based on information related to a user stored in a user device, for example, the display device 100.

For example, the expanded keyword may include location information of the display device 100, weather information of a corresponding location, time information, a usage history of the display device 100, a primary usage time or a rest time (non-usage time) of the display device 100, and information obtainable therefrom. Additionally, for example, the expanded keyword may include a content provider used on the display device 100 (for example, an over-the-top (OTT) provider or a video-on-demand (VOD) provider), a content usage record, and information obtainable from the content usage record (for example, a genre, a live broadcast, or VOD).

The prompt generation device generates a prompt based on the extracted keyword and the expanded keyword (S330). The prompt may be composed of at least one sentence.

When a prompt is generated, an expanded keyword may be added. Accordingly, higher accuracy of a response of an interactive artificial intelligence service may be expected, and limitations of voice input of a user who has difficulty inputting a detailed request may be overcome.

The prompt generation device may input or transmit the generated prompt to an interactive artificial intelligence service (S340). In the present specification, the "interactive artificial intelligence service" refers to a device or a system external to the prompt generation device and may be understood as a term that is replaceable with a device or a service for an interactive artificial intelligence service.

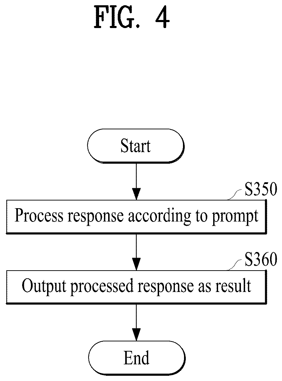

FIG. 4 is a flowchart of a method for generating a prompt for an interactive artificial intelligence service according to the present disclosure.

The flowchart of FIG. 4 relates to a procedure performed after the procedure of FIG. 3.

The prompt generation device transmits a generated prompt to the interactive artificial intelligence service and receives a response from the interactive artificial intelligence service.

The prompt generation device may process the received response (S350). Since the response received from the interactive artificial intelligence service is text information, processing is required in order to output the response on a display 150 so that a user is capable of checking the response.

Accordingly, the processed response may include at least a part of the received response and graphics or images related thereto. Additionally or alternatively, the processed response may include at least a part of the received response and a user input interface for receiving a user response thereto (such as confirmation or a modification request).

The prompt generation device outputs the processed response on the display 150 (S360).

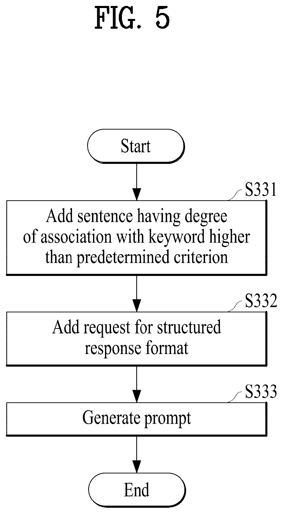

FIG. 5 is a flowchart of a method for generating a prompt for an interactive artificial intelligence service according to the present disclosure.

The prompt generation device may add, to a prompt, a sentence having a degree of association with a keyword that is higher than a predetermined criterion (S331). This corresponds to generation of a general sentence related to the keyword, and more specifically, to generation of a sentence related to the keyword and an expected response to the keyword.

For example, sentences may be generated as shown in Table 1 below.

**[Table 1]**

| | Utterance | Extracted keyword | Expanded keyword | Additional sentence |
|---|---|---|---|---|
| 1 | "Recommend a movie to watch by 10 o'clock." | "movie," "by 10 o'clock" | Device CP, content domain, genre, time | "Create a schedule without overlap." |
| | | | | "Provide a 5-minute break time after each movie." |
| | | | | "Create a schedule by calculating an exact running time of each movie." |
| 2 | "Find nearby restaurants." | "nearby," | region, weather, date, time | "Search for warm food." |
| | | "restaurants" | | "Provide search results for the top 10 popular places." |
| 3 | "Recommend destinations suitable for a 3-night, 4-day overseas trip." | "3-night, 4-day," "overseas travel" | configured country, request time date (month), holiday information, holiday information based on TV viewing time | "Recommend destinations that are good to visit by considering exchange rates and special events." |

Generation of a sentence having a degree of association with the keyword that is higher than the predetermined criterion may be performed based on collected data. For example, the prompt generation device may collect sentences used together with the keyword through the web and select a sentence that exceeds the predetermined criterion (for example, a specific frequency) from among the collected sentences. The prompt generation device may add the selected sentence to the prompt.

The prompt generation device may add a request for a structured response format to the prompt (S332). The request for the structured response format determines a format in which a response to be received from the interactive artificial intelligence service is output. For example, the request for the structured response format is for structuring the response into a form that is immediately usable by classifying the response into a summary, detailed content, major keywords, and the like.

The structured response format is also associated with the keyword. Accordingly, the prompt generation device may collect sentences or words used together with the keyword through the web and determine the structured response format based on the collected sentences or words.

Additionally or alternatively, the request for the structured response format may include designation of detailed items associated with the keyword expected as a response to the prompt.

For example, structured response format requests may be added as shown in Table 2 below.

**[Table 2]**

| | Utterance | Extracted keyword | Expanded keyword | Structured response format request |
|---|---|---|---|---|
| 1 | "Recommend a movie to watch by 10 o'clock." | "movie," "by 10 o'clock" | Device CP, content domain, genre, time | Write a response result as a list in JSON code by including a "start time", an "end time", a "movie title", and a "VOD provider". |
| | | | | The start time is to be assigned as a value to a key named "start", the end time is to be assigned as a value to a key named "end", the movie title is to be assigned as a value to a key named "name", and the keyword is to be assigned as a value to a key named "cp". |
| 2 | "Find nearby restaurants." | "nearby," "restaurants " | region, weather, date, time | Write a response result as a list in JSON code by including a "business name", a "type of food", and a "location on a map". |
| | | | | The business name is to be assigned as a value to a key named "name", the type of food is to be assigned as a value to a key named "type", and the location on the map is to be assigned as a value to a key named "location". |
| 3 | "Recommend destinations suitable for a 3-night, 4-day overseas trip." | "3-night, 4-day," "overseas travel" | configured country, request time date (month), holiday information, holiday information based on TV viewing time | Write a response result in JSON code by including "detailed content", a "summary" to be shown as a user response, and a "keyword" for searching related images. |
| | | | | The summary is to be assigned as a value to a key named "summary", the detailed content is to be assigned as a value to a key named "content", and the keyword is to be assigned as a value to a key named "keyword". |

The prompt generation device may generate a prompt including a keyword, an additional sentence associated with the keyword, and a request for a structured response format (S333).

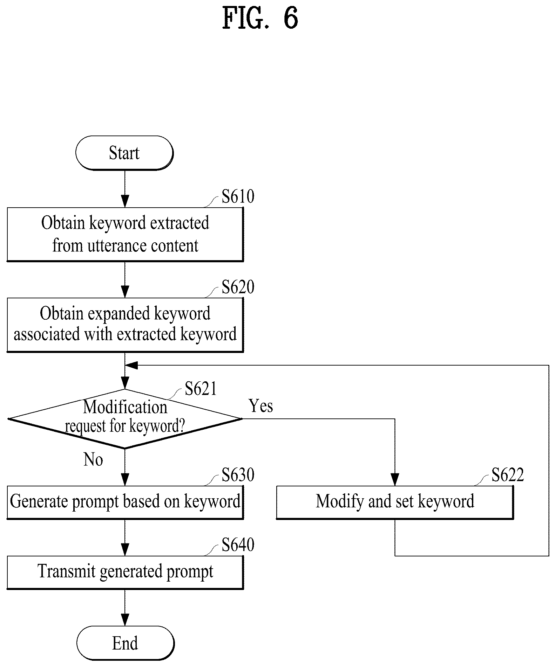

FIG. 6 is a flowchart of a method for generating a prompt for an interactive artificial intelligence service according to the present disclosure.

FIG. 6 includes portions that overlap with FIG. 3 and the corresponding description thereof, and a difference lies in that a procedure for modifying a keyword is included.

The prompt generation device may obtain a keyword extracted from a user utterance (S610). In addition, the prompt generation device may obtain an expanded keyword associated with the keyword obtained from the user utterance (S620). Here, the expanded keyword may be derived from user context information stored in a user device, for example, the display device 100.

The prompt generation device may inquire about a user modification request with respect to the obtained keyword (S621). When the modification request for the obtained keyword is input, the prompt generation device may modify and set the obtained keyword (S622).

That is, before generating a prompt based on a keyword, the prompt generation device may inquire about a modification request for the keyword and receive a modification instruction therefor.

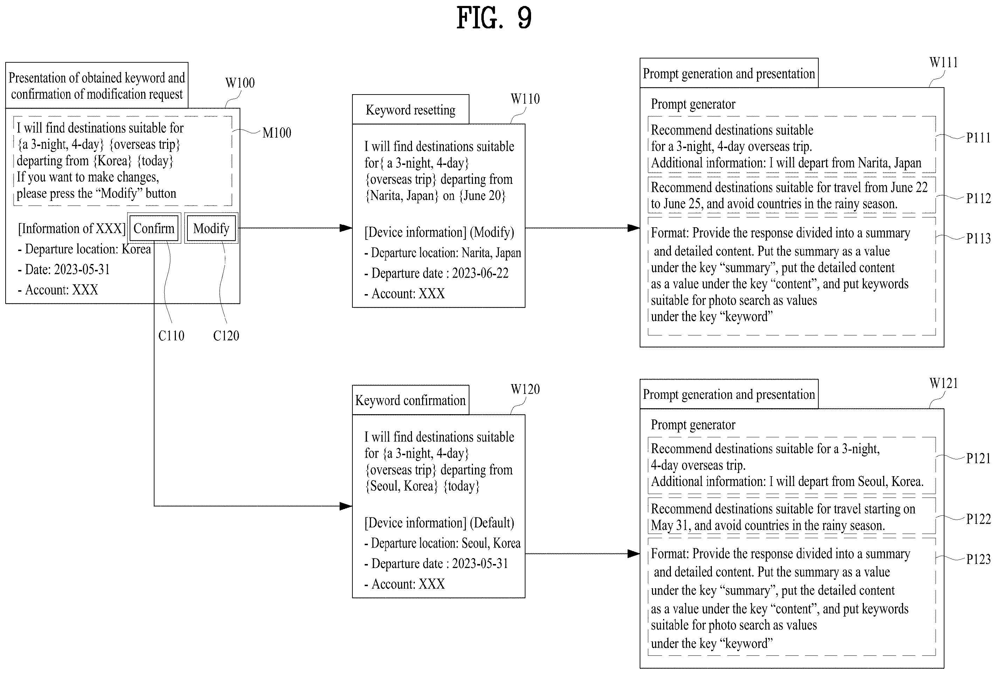

A process of the user modification request for the obtained keyword is described with reference to FIG. 9.

The prompt generation device displays the keyword obtained through S310 to S320 or S610 to S620 on the display 150 and outputs a message (W100) for a modification request or confirmation thereof. The message (W100) includes content regarding the obtained keyword and content (M100) regarding the modification request therefor, and includes a user input interface for command input of confirmation (no modification) (C110) and a modification request (C120). Context information of a user (XXX) may be output below the message.

When a user receives the modification request inquiry, the user may modify the keyword or may not modify the keyword.

When the modification request (C120) is input, the prompt generation device may output, through the display 150, a user input interface (not shown) for the keyword modification and receive an input thereto. Thereafter, the prompt generation device may output, on the display 150, a message (W110) indicating the modified or reset keyword. A modification request for the modified or reset keyword may be inquired again. For example, the modification request for the keyword (or an inquiry for the modification request) may be requested a predetermined number of times.

When there is no further modification request, the prompt generation device may generate a prompt based on the modified or reset keyword (when there has been no modification request, the prompt generation device may generate a prompt based on the keyword obtained in S610 to S620) (S630). The prompt generation device may transmit the generated prompt to the interactive artificial intelligence service (S640).

After generating the prompt, the prompt generation device may output, on the display 150, a message (W111) indicating the generated prompt. Referring to the illustrated message (W111), the generated prompt includes a basic query (P111) generated based on the obtained keyword, an additional sentence (P112) related to an expected response to the keyword, and a sentence (P113) for a structured response format request.

When confirmation (C110) is input, the prompt generation device may output, on the display 150, a message (W120) indicating a confirmed keyword. Thereafter, the prompt generation device may generate a prompt based on the confirmed keyword (S630) and transmit the generated prompt to the interactive artificial intelligence service (S640). After generating the prompt, the prompt generation device may output, on the display 150, a message (W121) indicating the generated prompt. Referring to the illustrated message (W121), the generated prompt includes a basic query (P121) generated based on the obtained keyword, an additional sentence (P122) related to an expected response to the keyword, and a sentence (P123) for a structured response format request.

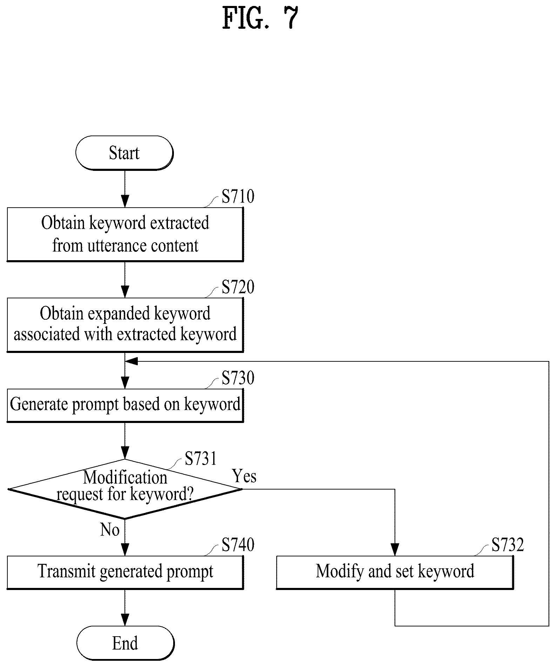

FIG. 7 includes portions that overlap with FIG. 3 and the corresponding description thereof, and a difference lies in that a procedure for modifying a keyword is included. In addition, FIG. 7 includes portions that overlap with FIG. 6 and the corresponding description thereof, and a difference lies in the order of the procedure for modifying the keyword.

The prompt generation device may obtain a keyword extracted from a user utterance (S710). In addition, the prompt generation device may obtain an expanded keyword associated with the keyword derived from the user utterance (S720). Here, the expanded keyword may be derived from user context information stored in a user device, for example, the display device 100.

The prompt generation device may generate a prompt based on the obtained keyword (S730).

The prompt generation device may output the generated prompt on the display 150 and inquire about a modification request therefor (S731). When the modification request for the generated prompt is input, the prompt generation device may modify and set the keyword for the prompt (S732).

The prompt generation device may regenerate the prompt based on the modified and set keyword. The prompt generation device may output the regenerated prompt on the display 150.

After generating a prompt based on a keyword, the prompt generation device may inquire about a modification request for the keyword with respect to the generated prompt and receive a modification instruction therefor.

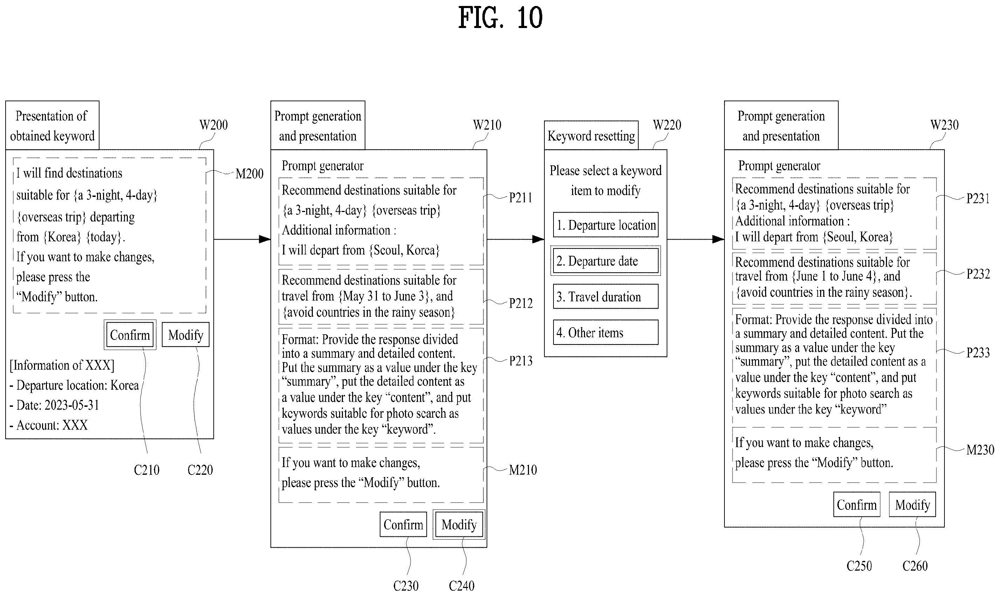

A process of the user modification request for the obtained keyword is described with reference to FIG. 10.

The prompt generation device displays the keyword obtained through S310 to S320 or S710 to S720 on the display 150 and outputs a message (W200) for a modification request or confirmation thereof. The message (W200) includes content regarding the obtained keyword and content (M200) regarding the modification request therefor. A user input interface for command input of confirmation (no modification) (C210) and a modification request (C220) is output. Context information of a user (XXX) may be output below the message.

When a user receives the modification request inquiry, the user may modify the keyword or may not modify the keyword.

In an embodiment illustrated in FIG. 10, a situation in which a user does not make a modification request for M200 is described.

When confirmation (C230) is input, the prompt generation device may generate a prompt based on the obtained keyword (S730), display the generated prompt through the display 150, and output a message (W210) for the keyword modification request or confirmation related thereto. When a user receives the inquiry for the modification request, the user may modify the keyword or may not modify the keyword.

When a modification request (C240) is input, the prompt generation device may output, through the display 150, a message (W220) for a user input interface for keyword modification or resetting and receive an input thereto. As illustrated, when "2. departure date" is selected as a modification item, the prompt generation device may output, on the display 150, a user input interface for selecting or inputting a departure date and receive an input thereto.

Thereafter, the prompt generation device may modify and set a keyword corresponding to the departure date (that is, only the departure date is modified among a previous set of keywords) and regenerate the prompt based on the modified keyword.

After generating the prompt, the prompt generation device may output, on the display 150, a message (W230) indicating the generated prompt. Referring to the illustrated message (W230), the generated prompt includes a basic query (P231) generated based on the obtained keyword, an additional sentence (P232) related to an expected response to the keyword, and a sentence (P233) for a structured response format request. In addition, the message (W230) includes content (M230) regarding a modification request for the generated prompt and includes a user input interface for command input of confirmation (no modification) (C250) and a modification request (C260).

When there is no further modification request, the prompt generation device may transmit the generated prompt to the interactive artificial intelligence service (S740).

As in M230, an inquiry for a modification request may be made again for a modified or reset keyword, and the modification request for the keyword (or the inquiry for the modification request) may be allowed only a predetermined number of times.

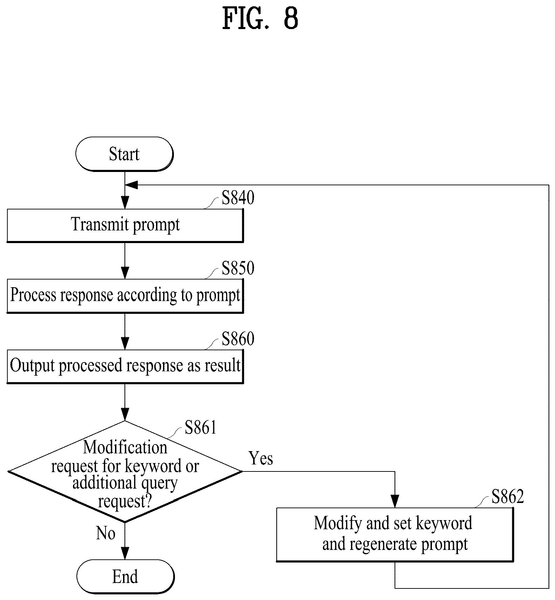

FIG. 8 includes portions that overlap with FIG. 4 and the corresponding description thereof, and a difference lies in that a keyword modification procedure or an additional query procedure is included.

The flowchart of FIG. 8 relates to a procedure performed after the procedures of FIG. 3 and FIGS. 5 to 7.

The prompt generation device may transmit a generated prompt to an interactive artificial intelligence service (S840). S840 may correspond to any one of S340 of FIG. 3, S640 of FIG. 6, or S740 of FIG. 7. In response thereto, the prompt generation device may receive, from the interactive artificial intelligence service, a response corresponding to the generated prompt.

The prompt generation device may process the received response (S850). Since the response received from the interactive artificial intelligence service is text information, processing is required in order to output the response on the display 150 for user confirmation. Accordingly, the processed response may include at least a part of the received response and graphics or images related thereto.

Additionally or alternatively, the processed response may include at least a part of the received response and a user input interface for receiving a user response thereto (such as confirmation or a modification request).

The prompt generation device may output the processed response on the display 150 (S860).

In this case, the prompt generation device may inquire about a user modification request for the processed response (S861). When the modification request for the processed response is input, the prompt generation device may modify and set a keyword and/or may regenerate the prompt based thereon (S862).

After generating the prompt and receiving a response to the generated prompt, the prompt generation device may inquire about a modification request for the keyword and receive a modification instruction therefor.

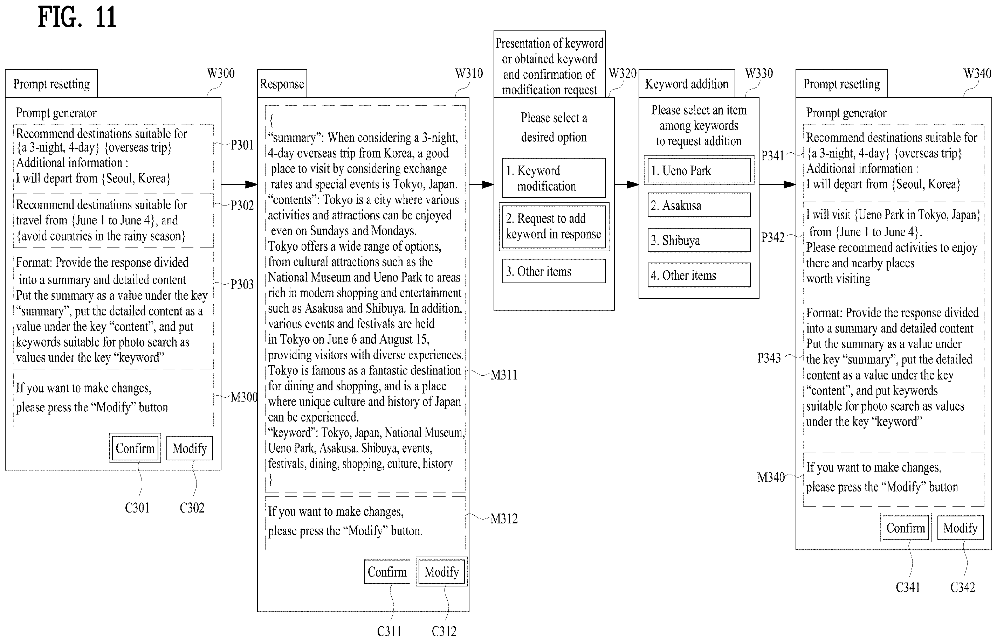

A process of the user modification request for the keyword is described with reference to FIG. 11.

The prompt generation device may indicate the prompt generated through S330, S333, S630, S730, and the like on the display 150 and output a message (W300) for a modification request or confirmation thereof. Since the message (W300) is substantially the same as the message (W210) and the message (W230) of FIG. 10, a description thereof is omitted, and reference is made to the corresponding description related to FIG. 10.

In an example illustrated in FIG. 11, a case in which a user inputs a confirmation (no modification) (C301) command with respect to content (M300) regarding a modification request or confirmation for a generated prompt is described. The prompt generation device may transmit the prompt to the interactive artificial intelligence service. The prompt generation device may receive a response thereto and display the response on the display 150.

The prompt generation device may output, on the display 150, a message (W310) including a response (M311) to the prompt and a user input interface (M312) for modification or an additional query with respect to the response.

When a modification command for the prompt is input through the user input interface (M312), the prompt generation device may output a message (W320) for modification or addition with respect to the keyword or the prompt on the display 150. As illustrated, the message (W320) presents a plurality of options and provides a user input interface for selecting the options. That is, the prompt generation device may modify and set the keyword or may regenerate the prompt based thereon according to user input (S862).

When "1. keyword modification" is input based on user input, the procedure described with reference to W220 of FIG. 10 may be performed.

When "2. request to add a keyword in a response" is input based on user input, the prompt generation device may output, on the display 150, a message (W330) for requesting addition of a keyword in the response, and the message (W330) may include a user input interface for requesting addition of each keyword or other items. As illustrated, when "1. Ueno Park" is selected as an additional item, the prompt generation device may add "Ueno Park" to "destination" in relation to the keyword, generate a prompt (S862), and output the generated prompt again on the display 150. A message (W340) related to the generated prompt is output, and the message includes a sentence (P342) to which "Ueno Park" is added and content (M340) for the keyword modification request or confirmation. Accordingly, when confirmation (C341) is input, the prompt generation device may transmit the generated prompt to the interactive artificial intelligence service (S840).

When a modification request (C342) is input, the procedure described with reference to W220 of FIG. 10 may be repeated.

When a response to the prompt is received or output and there is no further modification request, the prompt generation device may terminate the procedure.

A modification request (or an inquiry for the modification request) after a response to the prompt is received or output may be allowed only a predetermined number of times.

The flowcharts of FIGS. 3 to 8 described above may be performed by a prompt generation system. The prompt generation system may be configured to include the display device 100 or the controller of the display device 100, and/or the system or server on the network connected to the display device 100 through wired or wireless communication as described above, or to include functions thereof.

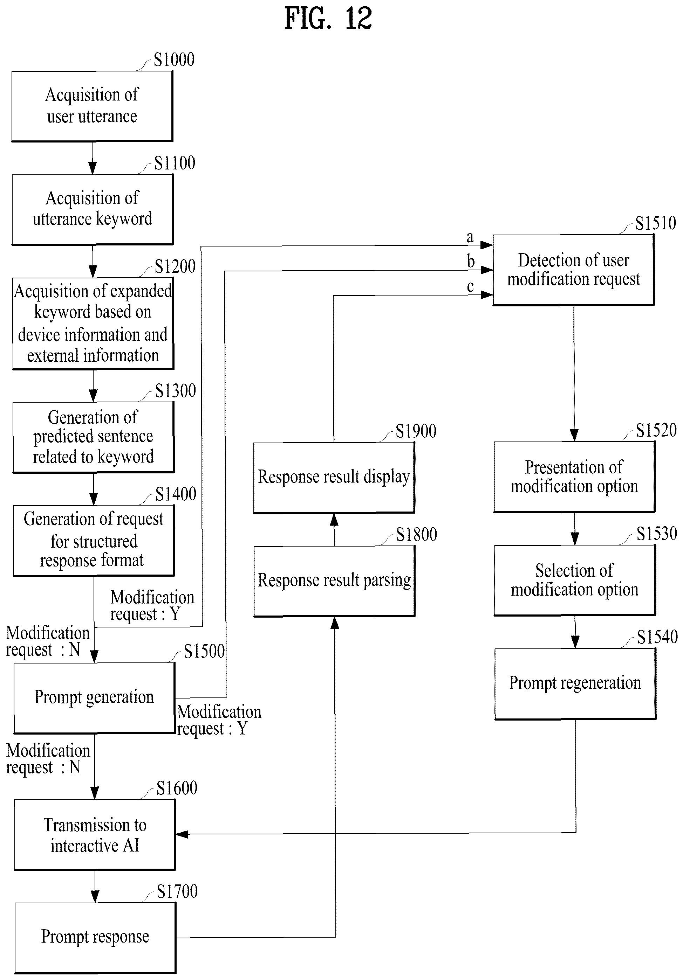

FIG. 12 illustrates a block diagram for explaining an overall structure of a device or a system to which the present disclosure is applied.

Assuming a situation in which there is no modification according to user input, the present disclosure includes obtaining a user utterance (S1000), obtaining a keyword from the user utterance (S1100), obtaining an expanded keyword based on device information and external information (S1200), generating and adding a predicted sentence related to the keyword (S1300), adding a request for a structured response format (S1400), generating a prompt (S1500), transmitting the generated prompt to an interactive artificial intelligence (AI) service (S1600), receiving a response to the prompt (S1700), parsing a response result (S1800), and displaying the response result (S1900).

A modification request or an additional request according to user input may be performed in three parts as described above (a, b, and c of FIG. 12). The request may be performed after S1400, after S1500, and after S1900.

As described above, the procedures illustrated in FIGS. 3 and 4 and FIGS. 6 to 8 may be performed by the display device 100 independently, by a server device (not shown) independently, or through cooperation between the display device 100 and the server device.

When the display device 100 and the server device perform the procedures through cooperation, subjects that perform the procedures may be distinguished at least as follows.

**[Table 3]**

| | Client device | Server device |
|---|---|---|
| FIG. 3 | S310, S320 | S330, S340 |
| FIG. 4 | S360 | S350 |
| FIG. 6 | S610, S620, S621, S622 | S630, S640 |
| FIG. 7 | S710, S720,S731, S732 | S730, S740 |
| FIG. 8 | At least a part of S860, S861, and S862 (keyword modification and setting) | At least a part of S840, S850, and S862 (prompt regeneration) |

Referring to FIG. 12, when the display device 100 and the server device perform the procedures through cooperation, subjects that perform the procedures may be distinguished at least as follows.

**[Table 4]**

| Client device | Server device |
|---|---|
| S1000, S1100, S1200, S1900 | S1300, S1400, S1500, S1540, S1600, S1700, S1800 |

In particular, for S1510, S1520, and S1530 of FIG. 12, subjects that perform the procedures may be distinguished as follows.

**[Table 5]**

| | Client device | Server device |
|---|---|---|
| First embodiment | S1510, S1530 | S1520 |
| Second embodiment | S1530 | S1510, S1520 |

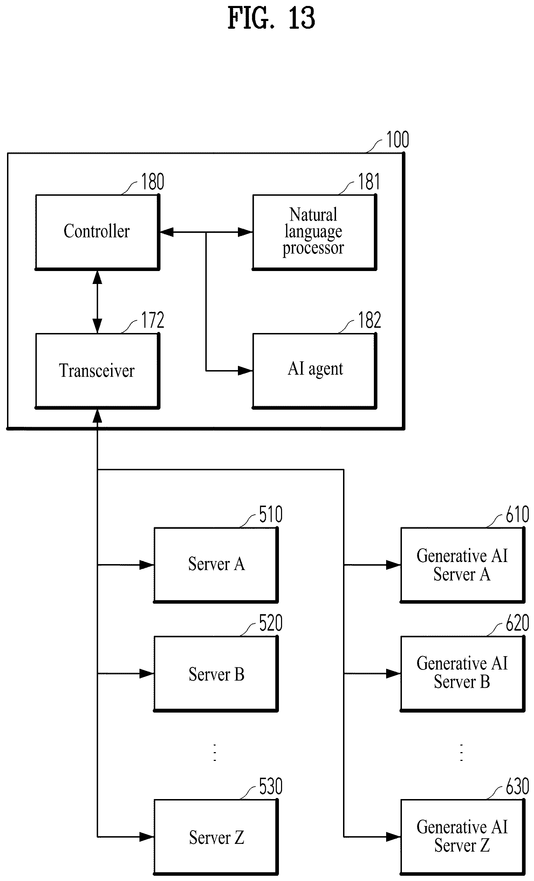

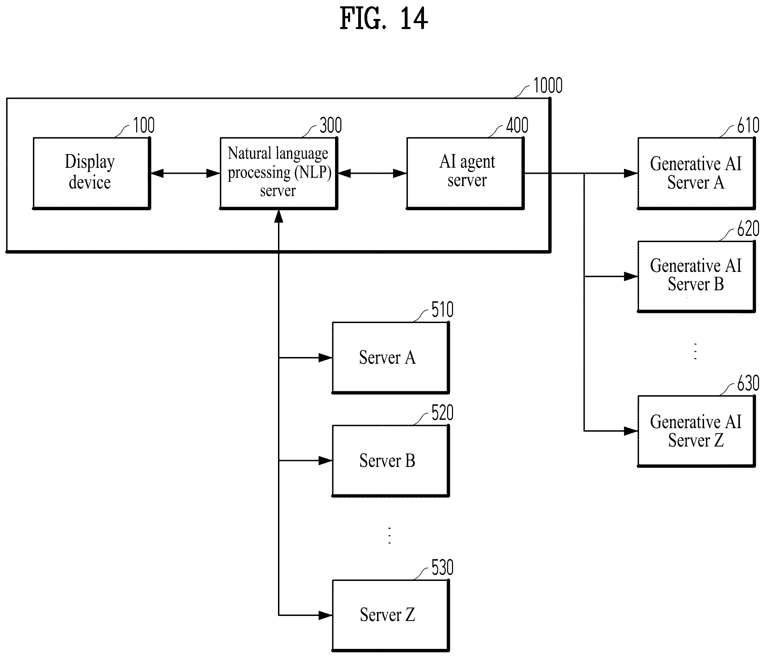

FIGS. 13 and 14 illustrate structures of a system for an interactive AI service according to the present disclosure.

FIG. 13 illustrates a system structure when the display device 100 independently performs the procedures illustrated in FIGS. 3 and 4 and FIGS. 6 to 8 described above. The display device 100 of FIG. 13 may include other configurations of FIG. 1 that are not illustrated.

Referring to FIG. 13, a natural language processor 181 and an AI agent 182 are embedded in the display device 100.

The natural language processor 181 recognizes a user utterance converted into text (characters) and analyzes a user intention. The natural language processor 181 determines whether to use the AI agent 182 according to the analyzed user intention. The natural language processor 181 may interact with external servers A 510 to Z 530 in order to analyze the user intention or to determine whether to use the AI agent. The external servers A 510 to Z 530 may include servers of portal sites that provide various services including a search service.

The AI agent 182 generates a prompt and determines which generative AI server (610 to 630) is to be used. A generative AI server may include, for example, a server that generates content (responses) specialized for text (characters) and a server that generates content (responses) specialized for images (videos).

Although the natural language processor 181 and the AI agent 182 are illustrated as separate components, the present disclosure may be implemented in a form in which the natural language processor 181 and the AI agent 182 are embedded in the controller 180 of the display device 100.

FIG. 14 illustrates a system structure when the display device 100 performs the procedures illustrated in FIGS. 3 and 4 and FIGS. 6 to 8 described above through cooperation with servers 300 and 400. Referring to FIG. 14, the natural language processor 181 and the AI agent 182 illustrated in FIG. 13 are configured as separate servers 300 and 400, respectively. Together with the display device 100, the natural language processor 181 and the AI agent 182 constitute a prompt generation system 1000 for an interactive AI service according to the present disclosure. Operations or functions of the servers 300 and 400 may be the same as those of the natural language processor 181 and the AI agent 182 illustrated in FIG. 13. Although a natural language processing server device 300 and an AI agent server device 400 are illustrated as separate components, the present disclosure may be implemented in a form in which the natural language processing server device 300 and the AI agent server device 400 are integrated into a single server.

Referring to FIG. 12, operations of the prompt generation system 1000 are described.

The system 1000 may acquire a user utterance (S1000). The user utterance may be detected through a sound detection means such as a microphone sensor and may be converted into text through STT technology.

The system 1000 obtains a keyword extracted from the user utterance (S1100).

The system 1000 obtains an expanded keyword based on information related to a user obtained and/or information related to the extracted keyword (S1200). To obtain the expanded keyword, a procedure for identifying or analyzing a user intention is required, and the procedure is performed through natural language processing. To identify or analyze the user intention, information related to the user may be obtained from a user device such as the display device 100, or information obtained through external servers 510, 520, and 530 may be used.

In addition, the system 1000 may determine which generative AI server (610 to 630) is to be used based on the user intention.

Thereafter, the system 1000 may generate a predicted sentence related to the keyword (S1300). The predicted sentence refers to a sentence having a degree of association with the keyword that is higher than a predetermined criterion, and an example thereof is a general sentence related to the keyword, such as the "additional sentence" in Table 1.

The system 1000 may generate a request for a structured response format (S1400). The structured response format refers to a format of a response to be received from the interactive AI service. For example, the structured response format is for structuring a response into a form that is immediately usable by classifying the response into a summary, detailed content, major keywords, and the like. The structured response format is also associated with the keyword. With regard to the structured response format, reference is made to Table 2 described above.

The user intention may be used for S1300 and/or S1400. That is, the system 1000 may generate the predicted sentence and/or the request for the structured response format based on the user intention.

However, S1300 and/or S1400 are optional procedures in the system 1000. That is, the procedures may be performed or may not be performed as necessary.

The system 1000 generates a prompt based on the extracted keyword and the expanded keyword (S1500). When the predicted sentence or the request for the structured response format is generated, the predicted sentence or the request for the structured response format may be added to the prompt.

The system 1000 transmits the generated prompt to the interactive AI service (S1600). When a generative AI server to be used has been determined in advance, the generated prompt may be transmitted to a service corresponding to the determined generative AI server.

The system 1000 receives a response to the generated prompt from the interactive AI service (S1700).

The system 1000 may parse a received response result (S1800) and display the parsed response result on a display (S1900).

The system 1000 may process a modification request or an additional request according to user input, and the modification request or the additional request may be performed in three parts (a, b, and c of FIG. 12). The request may be performed after S1400, after S1500, and after S1900.

The system 1000 may detect a user modification request (S1510).When the user modification request is detected, the system 1000 may present options for modification (S1520), and the modification may include modification of a keyword, addition of a keyword, and the like. The system 1000 may detect or receive a selection of a user option (S1530). Thereafter, the system 1000 may regenerate the prompt according to the modified information (S1540).

The block diagram of FIG. 14 illustrates the system 1000 of the present disclosure as being configured with the display device 100 and servers 300 and 400. However, the present disclosure may be implemented as the system 1000 configured in various manners. Specifically, the system 1000 may be considered as being divided as follows.
A) FIG. 13 (all components are embedded in the display device 100)
B) FIG. 14 (the display device 100 and the servers 300 and 400 constitute the system 1000)
C) The display device 100 and the server 300 constitute the system 1000
D) The display device 100 and the server 400 constitute the system 1000
E) The display device 100 and the servers 300 and 400 are configured separately

Among the above configurations, configurations A) and B) have been described above with reference to FIGS. 3 to 8, FIG. 12, FIG. 13, and FIG. 14, and thus a description thereof is omitted. Configurations C), D), and E) are described in detail below.

Configuration C) is described below. The system 1000 of the present disclosure is configured with the display device 100 and a natural language processing server 300. Operations of the system 1000 are described with reference to FIG. 12.

The system 1000 may acquire a user utterance (S1000). The user utterance may be detected through a sound detection means such as a microphone sensor and may be converted into text through STT technology.

The system 1000 obtains a keyword extracted from the user utterance (S1100).

The system 1000 obtains an expanded keyword based on information related to a user obtained and/or information related to the extracted keyword (S1200). To obtain the expanded keyword, a procedure for identifying or analyzing a user intention is required, and the procedure is performed through natural language processing. To identify or analyze the user intention, information related to the user may be obtained from a user device such as the display device 100, or information obtained through external servers 510, 520, and 530 may be used.

Thereafter, the system 1000 may generate a predicted sentence related to the keyword (S1300). The predicted sentence refers to a sentence having a degree of association with the keyword that is higher than a predetermined criterion, and an example thereof is a general sentence related to the keyword, such as the "additional sentence" in Table 1.

The system 1000 may generate a request for a structured response format (S1400). The structured response format refers to a format of a response to be received from the interactive AI service. For example, the structured response format is for structuring a response into a form that is immediately usable by classifying the response into a summary, detailed content, major keywords, and the like. The structured response format is also associated with the keyword. With regard to the structured response format, reference is made to Table 2 described above.

The user intention may be used for S1300 and/or S1400. That is, the system 1000 may generate the predicted sentence and/or the request for the structured response format based on the user intention.

In addition, the request for the structured format may include the form of content to be provided as a response, for example, images, videos, map information, and the like.

The system 1000 may transmit the generated predicted sentence and/or the generated request for the structured response format to an AI agent server 400. The extracted keyword and the expanded keyword may be transmitted to the AI agent server 400 separately or together with the generated predicted sentence and/or the generated request for the structured response format.

However, S1300 and/or S1400 are optional procedures in the system 1000. That is, the procedures may be performed or may not be performed as necessary.

In addition, although S1300 and S1400 have been described as being performed by the system 1000, one of S1300 or S1400 may be performed by the AI agent server 400, that is, outside the system 1000.

To this end, the system 1000 may request the AI agent server 400 to generate the predicted sentence or to generate the request for the structured response format. The system 1000 may transmit the extracted keyword or the expanded keyword to the AI agent server 400. Accordingly, the AI agent server 400 may generate the predicted sentence or the request for the structured response format. For this purpose, the AI agent server 400 may cooperate with servers 510 to 530 or with other devices or systems. The AI agent server 400 may generate the predicted sentence and/or the request for the structured response format based on the user intention.

Thereafter, the AI agent server 400 generates a prompt based on the extracted keyword and the expanded keyword (S1500). When the predicted sentence or the request for the structured response format has been generated or received from the system 1000, the AI agent server 400 may add the predicted sentence or the request for the structured response format to the prompt.

After generating the prompt or before generating the prompt, the AI agent server 400 may determine which generative AI server (610 to 630) is to be used. The AI agent server 400 may determine which generative AI server (610 to 630) is to be used based on the user intention.

The AI agent server 400 transmits the generated prompt to the interactive AI service (S1600). When a generative AI server to be used has been determined in advance, the generated prompt may be transmitted to a service corresponding to the determined generative AI server.

Based on the transmitted prompt, the generative AI server (610 to 630) may generate a response. The generative AI server may transmit the generated response to the AI agent server 400.

The AI agent server 400 receives the response to the generated prompt from the interactive AI service (S1700).

The AI agent server 400 may parse a received response result (S1800) and transmit the parsed response result to the system 1000.

The system 1000 may receive the parsed result and display the parsed result on a display (S1900).

The system 1000 may process a modification request or an additional request according to user input, and the modification request or the additional request may be performed in three parts (a, b, and c of FIG. 12). The request may be performed after S1400, after S1500, and after S1900.

The system 1000 may detect a user modification request (S1510). When the user modification request is detected, the system 1000 may present options for modification (S1520), and the modification may include modification of a keyword, addition of a keyword, and the like. The options for modification may be provided by the AI agent server 400. In this case, the system 1000 may display the options for the user on the display and display a user interface on the display to detect an input for the options.

The system 1000 may detect or receive a selection of a user option (S1530). Thereafter, the system 1000 transmits the detected or received information to the AI agent server 400, and the AI agent server 400 may regenerate the prompt according to the modified information (S1540).

Configuration D) is described below. The system 1000 of the present disclosure is configured with the display device 100 and the AI agent server 400. Operations of the system 1000 are described with reference to FIG. 12.

The system 1000 may acquire a user utterance (S1000). The user utterance may be detected through a sound detection means such as a microphone sensor and may be converted into text through STT technology.

The system 1000 obtains a keyword extracted from the user utterance (S1100).

The system 1000 obtains an expanded keyword based on information related to a user obtained and/or information related to the extracted keyword (S1200).

To obtain the expanded keyword, a procedure for identifying or analyzing a user intention is required, and the procedure is performed through natural language processing. To identify or analyze the user intention, information related to the user may be obtained from a user device such as the display device 100, or information obtained through external servers 510, 520, and 530 may be used.

For this purpose, the system 1000 may request the natural language processing server 300 to identify the user intention with respect to the user utterance. The system 1000 may transmit information related to the user obtained and/or the extracted keyword to the natural language processing server 300. Accordingly, the natural language processing server 300 may identify or analyze the user intention and transmit a result thereof to the system 1000.

The system 1000 may determine which generative AI server (610 to 630) is to be used based on the user intention.

Thereafter, the system 1000 may generate a predicted sentence related to the keyword (S1300). In addition, the system 1000 may generate a request for a structured response format (S1400). With regard to the predicted sentence and the request for the structured response format, reference is made to the description provided above.

The user intention may be used for S1300 and/or S1400. That is, the system 1000 may generate the predicted sentence and/or the request for the structured response format based on the user intention.

However, S1300 and/or S1400 are optional procedures in the system 1000. That is, the procedures may be performed or may not be performed as necessary.

The system 1000 generates a prompt based on the extracted keyword and the expanded keyword (S1500). When the predicted sentence or the request for the structured response format has been generated, the predicted sentence or the request for the structured response format may be added to the prompt.

The system 1000 transmits the generated prompt to the interactive AI service (S1600). When a generative AI server to be used has been determined in advance, the generated prompt may be transmitted to a service corresponding to the determined generative AI server.

The system 1000 receives a response to the generated prompt from the interactive AI service (S1700).

The system 1000 may parse a received response result (S1800) and display the parsed response result on a display (S1900).

The system 1000 may process a modification request or an additional request according to user input, and the modification request or the additional request may be performed in three parts (a, b, and c of FIG. 12). The request may be performed after S1400, after S1500, and after S1900.

The system 1000 may detect a user modification request (S1510). When the user modification request is detected, the system 1000 may present options for modification (S1520), and the modification may include modification of a keyword, addition of a keyword, and the like. The system 1000 may detect or receive a selection of a user option (S1530). Thereafter, the system 1000 may regenerate the prompt according to the modified information (S1540).

Configuration E) is described below. Configuration E) relates to an embodiment in which the display device 100 implements the present disclosure through cooperation with the natural language processing server 300 and the AI server 400.

The display device 100 may acquire a user utterance (S1000). The user utterance may be detected through a sound detection means such as a microphone sensor and may be converted into text through STT technology.

The display device 100 obtains a keyword extracted from the user utterance (S1100).

The display device 100 obtains an expanded keyword based on information related to a user obtained and/or information related to the extracted keyword (S1200).

To obtain the expanded keyword, a procedure for identifying or analyzing a user intention is required, and the procedure is performed through natural language processing. To identify the user intention, the information related to the user stored or recorded in the display device 100 may be used. The display device 100 may obtain or collect the information related to the user from a storage means such as a memory thereof. In addition, information obtained through external servers 510, 520, and 530 may be used to identify the user intention.

The display device 100 may request the natural language processing server 300 to identify the user intention with respect to the user utterance. The display device 100 may transmit the information related to the user obtained and/or the extracted keyword to the natural language processing server 300. Accordingly, the natural language processing server 300 may identify or analyze the user intention and transmit a result thereof to the display device 100.

The received user intention may be shared with the AI agent server 400 or with other devices or systems for implementing the present disclosure. The AI agent server 400 may determine which generative AI server (610 to 630) is to be used based on the user intention.

Alternatively, the display device 100 may provide only the information related to the user obtained and/or the extracted keyword, and the expanded keyword may be obtained by the natural language processing server 300 or the AI agent server 400. That is, the display device 100 may request the expanded keyword from the natural language processing server 300 and/or the AI agent server 400. In this case, the display device 100 may transmit, to the natural language processing server 300 and/or the AI agent server 400, information required for obtaining the expanded keyword (for example, the keyword extracted from the user utterance, the information related to the user, and the like). The user intention may be directly shared between the natural language processing server 300 and the AI agent server 400. The display device 100 may receive the expanded keyword from the natural language processing server 300 and/or the AI agent server 400. 35

Thereafter, the display device 100 may generate a predicted sentence related to the keyword (S1300). In addition, the display device 100 may generate a request for a structured response format (S1400). With regard to the predicted sentence and the request for the structured response format, reference is made to the description provided above.

The user intention may be used for S1300 and/or S1400. That is, the display device 100 may generate the predicted sentence and/or the request for the structured response format based on the user intention.

The display device 100 may transmit the generated predicted sentence and/or the generated request for the structured response format to the AI agent server 400. The extracted keyword and the expanded keyword may be transmitted to the AI agent server 400 separately or together with the generated predicted sentence and/or the generated request for the structured response format.

However, S1300 and/or S1400 are optional procedures in the display device 100. That is, the procedures may be performed or may not be performed as necessary.

In addition, although S 1300 and S1400 have been described as being performed by the display device 100, one of S1300 or S1400 may be performed by the AI agent server 400 or by another device or system. To this end, the display device 100 may request the AI agent server 400 to generate the predicted sentence or to generate the request for the structured response format. The display device 100 may transmit the extracted keyword or the expanded keyword to the AI agent server 400. Accordingly, the AI agent server 400 may generate the predicted sentence or the request for the structured response format. For this purpose, the AI agent server 400 may cooperate with servers 510 to 530 or with other devices or systems. The AI agent server 400 may generate the predicted sentence and/or the request for the structured response format based on the user intention.

Thereafter, the AI agent server 400 generates a prompt based on the extracted keyword and the expanded keyword (S1500). When the predicted sentence or the request for the structured response format has been generated or received from the display device 100, the AI agent server 400 may add the predicted sentence or the request for the structured response format to the prompt.

After generating the prompt or before generating the prompt, the AI agent server 400 may determine which generative AI server (610 to 630) is to be used. The AI agent server 400 may determine which generative AI server (610 to 630) is to be used based on the user intention.

The AI agent server 400 transmits the generated prompt to the interactive AI service (S1600). When a generative AI server to be used has been determined in advance, the generated prompt may be transmitted to a service corresponding to the determined generative AI server.

The generative AI server (610 to 630) may generate a response based on the prompt. The generative AI server may transmit the generated response to the AI agent server 400.

The AI agent server 400 receives the response to the generated prompt from the interactive AI service (S1700).

The AI agent server 400 may parse a received response result (S1800) and transmit the parsed response result to the display device 100.

The display device 100 may receive the parsed result and display the parsed result on a display (S1900).

The display device 100 may process a modification request or an additional request according to user input, and the modification request or the additional request may be performed in three parts (a, b, and c of FIG. 12). The request be performed after S1400, after S1500, and after S1900.

The display device 100 may detect a user modification request (S1510). When the user modification request is detected, the display device 100 may present options for modification (S1520), and the modification may include modification of a keyword, addition of a keyword, and the like. The options for modification may be provided by the AI agent server 400. In this case, the display device 100 may display the options for the user on the display and display a user interface on the display to detect an input for the options.

The display device 100 may detect or receive a selection of a user option (S1530). Thereafter, the display device 100 may transmit the detected or received information to the AI agent server 400, and the AI agent server 400 may regenerate the prompt according to the modified information (S1540).

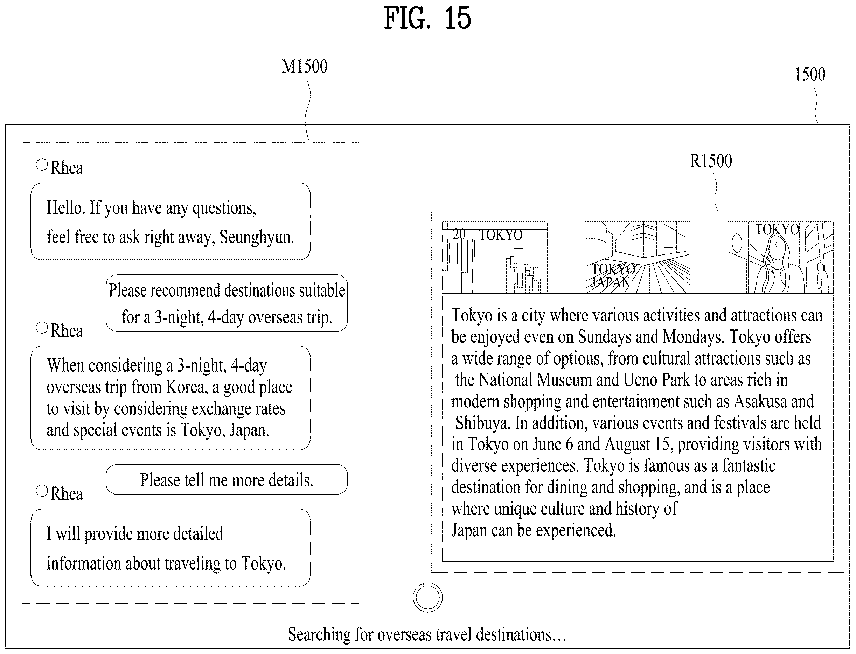

FIG. 15 illustrates a process of an interactive AI service according to a user utterance output on the display 150, keywords obtained therefrom, and a prompt according to the present disclosure. A conversation (M1500) between a user and the display device 100 or the system (or server device) according to the present disclosure is displayed on a user interface 1500 output on the display 150. In addition, a response (R1500) of the interactive AI service according to the keywords obtained from the utterance and the prompt is output.

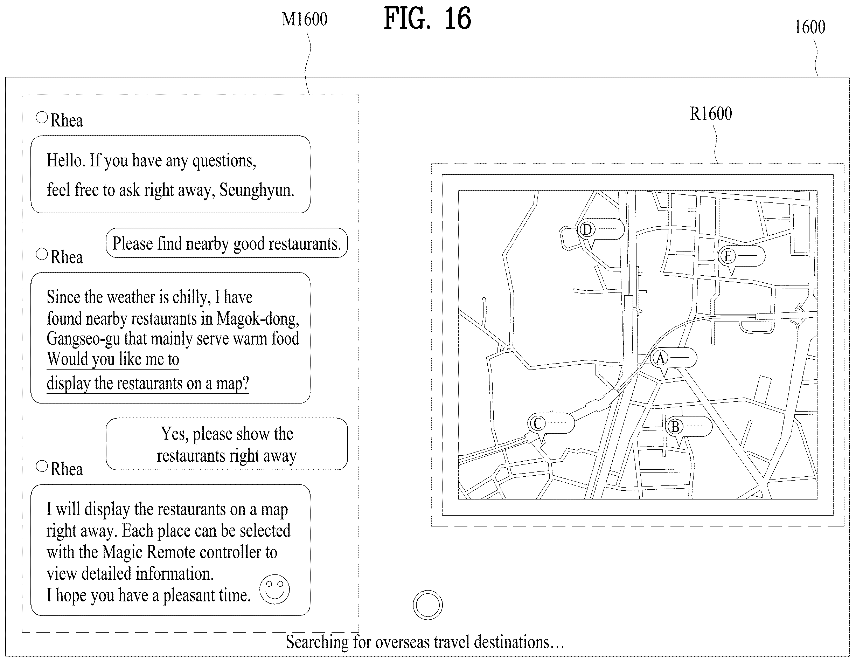

FIG. 16 illustrates a process of an interactive AI service according to a user utterance output on the display 150, keywords obtained therefrom, and a prompt according to the present disclosure. A conversation (M1600) between a user and the display device 100 or the system (or server device) according to the present disclosure is displayed on a user interface 1600 output on the display 150. In addition, a response (R1600) of the interactive AI service according to the keywords obtained from the utterance and the prompt is output. In this case, displaying a location of a restaurant on a map is performed because a sentence having a degree of association with a keyword that is higher than a predetermined criterion is added (see the content of Table 1).

In another aspect of the present disclosure, the above-described proposals or operations may be provided as code that is capable of being implemented, performed, or executed by computers (herein, the computer is a comprehensive concept including a system on chip (SoC), a processor, a microprocessor etc.) or a computer-readable medium or computer program product storing or including the code. The scope of the present disclosure may be extended to the code or the computer-readable storage medium or computer program product storing or including the code.

The preferred embodiments of the present disclosure are provided to allow those skilled in the art to implement and embody the present disclosure. While the present disclosure has been described and illustrated herein with reference to the preferred embodiments thereof, it is understood to those skilled in the art that various modifications and variations could be made therein without departing from the scope of the disclosure. Therefore, the present disclosure is not limited to the embodiments disclosed herein but intends to give the broadest scope consistent with the new principles and features disclosed herein.

## Claims

1. An apparatus configured to generate a prompt for an interactive artificial intelligence service, the apparatus comprising:
a controller configured to generate the prompt; and
a transceiver configured to transmit the generated prompt to the interactive artificial intelligence service,
wherein the controller is configured to:
obtain a keyword extracted from an utterance of a user;
obtain an expanded keyword associated with the extracted keyword; and
generate a prompt based on the extracted keyword and the expanded keyword,
wherein the expanded keyword is obtained based on information related to the user stored in a user device.

2. The apparatus of claim 1, wherein the controller is configured to add, to the prompt, a sentence having a degree of association with the extracted keyword and the expanded keyword that is higher than a predetermined criterion.

3. The apparatus of claim 1, wherein the controller is configured to add, to the prompt, a request for structuring a format of a response.

4. The apparatus of claim 3, wherein the request for structuring the format of the response includes designation of detailed items associated with the extracted keyword and the expanded keyword expected as a response to the generated prompt.

5. The apparatus of claim 1, wherein the controller is configured to:
receive a response to the transmitted prompt from the interactive artificial intelligence service; and
process the received response.

6. The apparatus of claim 1, wherein the utterance of the user is input through a microphone of a remote controller.

7. The apparatus of claim 1, wherein, before generating the prompt based on the extracted keyword and the expanded keyword, the controller is configured to:
receive a modification request for the extracted keyword and the expanded keyword; and
modify the keywords according to the modification request.

8. The apparatus of claim 1, wherein, before transmitting the generated prompt to the interactive artificial intelligence service, the controller is configured to:
receive a modification request for the extracted keyword and the expanded keyword; and
regenerate the prompt based on the keywords modified according to the modification request.

9. The apparatus of claim 5, wherein, after processing the received response and displaying the processed response on a display, the controller is configured to:
receive a modification request for the extracted keyword and the expanded keyword or an additional request related to the processed response based on the processed response; and
regenerate the prompt according to the modification request or the additional request.

10. A method for generating a prompt for an interactive artificial intelligence service, the method comprising:
obtaining a keyword extracted from an utterance of a user;
obtaining an expanded keyword associated with the extracted keyword;
generating a prompt based on the extracted keyword and the expanded keyword; and
transmitting the generated prompt to the interactive artificial intelligence service,
wherein the expanded keyword is obtained based on information related to the user stored in a user device.

11. The method of claim 10, wherein generating the prompt comprises adding, to the prompt, a sentence having a degree of association with the extracted keyword and the expanded keyword that is higher than a predetermined criterion.

12. The method of claim 10, wherein generating the prompt comprises adding, to the prompt, a request for structuring a format of a response.

13. The method of claim 12, wherein the request for structuring the format of the response includes designation of detailed items associated with the extracted keyword and the expanded keyword expected as a response to the generated prompt.

14. The method of claim 10, comprising:
receiving a response from the interactive artificial intelligence service; and
processing the received response.

15. The method of claim 10, wherein the utterance of the user is input through a microphone of a remote controller.

16. The method of claim 10, wherein, before generating the prompt based on the extracted keyword and the expanded keyword, the method comprises:
receiving a modification request for the extracted keyword and the expanded keyword; and
modifying the keywords according to the modification request.

17. The method of claim 10, wherein, before transmitting the generated prompt to the interactive artificial intelligence service, the method comprises:
receiving a modification request for the extracted keyword and the expanded keyword; and
regenerating the prompt based on the keywords modified according to the modification request.

18. The method of claim 14, wherein, after processing the received response and displaying the processed response on a display, the method comprises:
receiving a modification request for the extracted keyword and the expanded keyword or an additional request related to the processed response based on the processed response; and
regenerating the prompt according to the modification request or the additional request.

19. A computer-readable medium storing a computer program configured to execute the method of any one of claims 10 to 18.

20. A system configured to generate a prompt for an interactive artificial intelligence service, the system comprising a client device and a server device,
wherein the client device comprises:
a user input interface configured to sense an utterance of a user;
a controller configured to obtain a keyword extracted from the utterance of the user and obtain an expanded keyword associated with the extracted keyword based on information related to the user stored in the client device; and
a transceiver configured to transmit the extracted keyword and the expanded keyword to the server device, and
wherein the server device comprises:
a transceiver configured to receive the extracted keyword and the expanded keyword from the client device; and
a controller configured to generate a prompt based on the extracted keyword and the expanded keyword.
